Europäisches Patentamt

European Patent Office

Office européen des brevets

(11) Publication number: **0 527 237 A1**

## EUROPEAN PATENT APPLICATION
## published in accordance with Art. 158(3) EPC

(21) Application number: 92906199.2

(22) Date of filing: 26.02.92

(86) International application number:
PCT/JP92/00211

(87) International publication number:
WO 92/15455 (17.09.92 92/24)

(51) Int. Cl.⁵: **B32B 27/34**, B29C 55/12,
//B29K77:00,B29L7:00,B29L9:00

(30) Priority: 28.02.91 JP 34612/91
20.05.91 JP 114946/91
21.10.91 JP 272782/91
26.12.91 JP 345553/91

(43) Date of publication of application:
17.02.93 Bulletin 93/07

(84) Designated Contracting States:
AT BE CH DE DK ES FR GB GR IT LI LU MC
NL SE

(71) Applicant: MITSUBISHI KASEI POLYTEC
COMPANY
5-2, Marunouchi 2-chome Chiyoda-ku
Tokyo 100(JP)

(72) Inventor: MIYASHITA, Kazuhisa
1122-3, Nagakuni-Higashimachi
Tsuchiura-shi Ibaraki 300(JP)
Inventor: HASEGAWA, Masashi
44-10, Sakuragaoka-machi
Tsuchiura-shi Ibaraki 300(JP)

(74) Representative: Jung, Elisabeth
Patentanwälte Dr. Jung, Dr. Schirdewahn Dr.
Schmitt-Nilson Postfach 40 14 68
Clemensstrasse 30
W-8000 München 40 (DE)

(54) **BIAXIALLY ORIENTED POLYAMIDE LAMINATE FILM.**

(57) A biaxially oriented polyamide laminate film having at least three layers in total and comprising at least two kinds of layers selected among layer (a) comprising polymer (A) containing 0.3 to 5 wt % of polymer (P), layer (b) comprising polymer (B), and layer (c) comprising mixture (C) containing at most 5 wt% of polymer (P), wherein polymer (A) is an aromatic polyamide containing at least 70 mole % of polyamide constituents composed of m- and/or p-xylylenediamine and a $C_6$ to $C_{12}$ aliphatic $\alpha$, $\omega$-dicarboxylic acid in its molecule, polymer (B) is an aliphatic polyamide, mixture (C) is composed of polymer (A) and polymer (B), and polymer (P) is a mixture of 100 to 5 wt % of a polyolefin containing an unsaturated carboxylic acid grafted thereonto and 0 to 95 wt % of a polyolefin.

TECHNICAL FIELD

This invention relates to a biaxially-oriented laminated polyamide films which are excellent in oxygen gas barrier properties, flexing resistance, toughness and the like, and which can be suitably used as packaging films for foods, medical supplies, medicines and the like for which denaturation by oxidation must be avoided.

BACKGROUND ART

Non-oriented or oriented films of polyamide polymers have conventionally been utilized, either singly or by laminating them to other films, as a variety of packaging materials.

However, polyamide films composed only of an aliphatic polyamide, which are used generally, have the drawback of insufficient oxygen gas barrier properties though they are excellent in mechanical properties such as tensile strength and flexing resistance. In order to impart oxygen gas barrier properties to such films, a method in which a vinylidene chloride polymer latex is applied onto the films to provide a coating having excellent oxygen gas barrier properties has been proposed and put to practical use.

However, the films coated with a vinylidene chloride polymer latex have the drawback that they become opaque when treated with hot water. Moreover, they generate compounds containing chlorine when incinerated for disposal, causing environmental pollution.

On the other hand, there has been proposed a film having good oxygen gas barrier properties, prepared by using as a starting material an aromatic polyamide which comprises as a main component polyamide-constituting units consisting of m- and/or p-xylylenediamine and an $\alpha,\omega$ aliphatic dicarboxylic acid having 6 to 12 carbon atoms. This film is excellent in transparency and resistance to oil, but it is poor in flexing resistance. For this reason, this film has a limit in its use.

In order to obtain a film which possesses the advantageous properties of both of the above-described two types of polyamides, i.e. excellent tensile strength, flexing resistance and oxygen gas barrier properties, there has been proposed a method in which the two types of polyamides are separately subjected to melt extrusion and a biaxially-oriented laminated film is produced by the inflation method (Japanese Patent Kokai Publication No. 57-51427). Further, a three-layer laminated film has also been proposed, which is prepared by inserting a layer comprising as a main component an aromatic polyamide between layers comprising as a main component an aliphatic polyamide (Japanese Patent Kokai Publication No. 56-155762).

However, in the biaxially-oriented laminated films proposed in the above publications if the proportion of the aromatic polyamide is increased in order to improve the oxygen gas barrier properties, the flexing resistance of the laminated film decreases. When the proportion of the aliphatic polyamide is increased in order to improve the flexing resistance and the toughness, the laminated film becomes thick, so that it cannot be used as a flexible packaging material. In addition, both the oxygen gas barrier properties and the flexing resistance of this film are not at satisfactory levels.

Further, when a biaxially-oriented laminated film is produced by using the two different types of polyamides as starting materials, it is inevitable that a mixture of the different polyamides is formed. For instance, off-specification films are produced during the period from the start of the production of a biaxially-oriented laminated film to the steady state under which an on-specification product is produced; even after getting to the steady state, materials called trims are produced by trimming off the edges of the film in the trimming operation. These off-specification films and trims are mixtures of the different types of polyamides, and it is practically impossible to separately collect the respective types from them for reuse as virgin starting materials. If they are discarded as scraps, the production yield will be decreased thereby to increase the production cost. The above publications are completely silent as to how to reuse or recycle the off-specification films or trims, and thus no mention is made of the problem of deterioration of the physical properties of a film produced with the reuse of them.

DISCLOSURE OF THE INVENTION

Under the above circumstances in the prior art, an object of the present invention is to provide a biaxially-oriented laminated polyamide film which has excellent oxygen gas barrier properties, high flexing resistance, toughness and the like. Another object of the present invention is to provide a biaxially-oriented laminated polyamide film which is produced by effectively utilizing mixtures of different types of polyamide polymers used as starting materials, such as off-specification films or trims which are produced in the course of the production of a biaxially-oriented laminated polyamide film and have conventionally been discarded as scraps, and which is free from the deterioration in the physical properties caused by the reuse of the mixtures of the different types of polymers.

The above objects can be attained by a biaxially-oriented laminated polyamide film characterized in that it is produced by using the following polymer (A), polymer (B), mixture (C) and polymer (P) as starting materials, and that it comprises three or more layers of at least two types of layers selected from layer (a) comprising the polymer (A) containing 0.3 to 5% by weight of the polymer (P), layer (b) comprising the polymer (B) and layer (c) comprising the mixture (C) containing 5% by weight or less of the polymer (P):

polymer (A): an aromatic polyamide containing in its molecular chain 70 mol% or more of polyamide-constituting units consisting of m- and/or p-xylylenediamine and an α,ω aliphatic dicarboxylic acid having 6 to 12 carbon atoms;

polymer (B): an aliphatic polyamide;

mixture (C): a mixture of the polymer (A) and the polymer (B); and

polymer (P): a mixture of 100 to 5% by weight of a polyolefin grafted with an unsaturated carboxylic acid and O to 95% by weight of a polyolefin.

BEST MODE FOR CARRYING OUT THE INVENTION

The main starting materials of the biaxially-oriented laminated polyamide film according to the present invention are two types of polyamides (hereinafter respectively referred to as "polymer (A)" and "polymer (B)"), and a polyolefin (hereinafter referred to as "polymer (P)".

The polymer (A), one of the polyamides to be used, is a polymer containing in its molecular chain 70 mol% or more of polyamide-constituting units consisting of m- and/or p-xylylenediamine and an α,ω aliphatic dicarboxylic acid having 6 to 12 carbon atoms.

Specific examples of the polymer (A) include homopolymers such as polymethaxylylene adipamide, polymethaxylylene pimelamide, polymethaxylylene azelamide, polyparaxylylene azelamide and polyparaxylylene decanamide, and copolymers such as a methaxylylene/paraxylylene adipamide copolymer, a methaxylylene/paraxylylene pimelamide copolymer, a methaxylylene/paraxylylene azelamide copolymer and a methaxylylene/paraxylylene sebacamide copolymer.

In addition to the above-enumerated polymers, there can also be mentioned a copolymer comprising 70 mol% or more of the polyamide-constituting component consisting of m- and/or p-xylylenediamine and an α,ω aliphatic dicarboxylic acid having 6 to 12 carbon atoms, and a minor proportion of other polyamide-constituting components.

A diamine component, a dicarboxylic acid component and other components can be mentioned as the other polyamide-constituting component. Specific examples of the diamine component include aliphatic diamines such as hexamethylenediamine and 2,2,4-trimethylhexamethylenediamine, and heterocyclic or hetero-atom-containing diamines such as piperazine bispropylamine and neopentylglycol bispropylamine. Specific examples of the dicarboxylic acid component include aliphatic dicarboxylic acids such as adipic acid, azelaic acid and sebacic acid, aromatic dicarboxylic acids such as terephthalic acid and isophthalic acid, and cycloaliphatic dicarboxylic acids such as 1,4-cyclohexane dicarboxylic acid. Specific examples of the other components include lactams such as ε-caprolactam, and ω-aminocarboxylic acids such as ε-aminocarboxylic acid.

The polymer (A) may further comprises up to 20% by weight of a polymer (D) which is compatible with the polymer (A). Examples of the polymer (D) include those polyamides which are not enumerated in the above, and other thermoplastic resins.

The polymer (A) should contain in its molecular chain 70 mol% or more of the polyamide-constituting units consisting of m- and/or p-xylylenediamine and an α,ω aliphatic dicarboxylic acid having 6 to 12 carbon atoms. When the amount of the polyamide-constituting units is less than 70 mol%, the oxygen permeability of the resulting biaxially-oriented laminated film cannot reach a target value (15 cc/m$^2$•24H•atm or less at a temperature of 25°C and a relative humidity of 65%), so that such an amount is undesirable. Further, in the case where the polymer (A) comprises the polymer (D), it is undesirable that the amount of the polymer (D) is in excess of 20% by weight of the polymer (A) for the same reason as mentioned above.

The polymer (B), which is the other type of polyamides to be used, is an aliphatic polyamide.

Any chain polyamide having an amide bond can be used as the polymer (B). Specific examples of such a chain polyamide include a homopolymer of ε-caprolactam, polyhexamethylene adipamide and a copolymer comprising ε-caprolactam or hexamethylene adipamide as a main component and 2 to 10 mol% of a compound copolymerizable with the main component.

Examples of the compound copolymerizable with ε-caprolactam or hexamethylene adipamide include nylon salts of an aliphatic diamine and an aliphatic dicarboxylic acid. Specific examples of the aliphatic diamine include ethylenediamine, tetramethylenediamine, pentamethylenediamine, hexamethylenediamine,

3

octamethylenediamine and decamethylenediamine. Specific examples of the aliphatic dicarboxylic acid include adipic acid, sebacic acid, suberic acid, glutaric acid, azelaic acid, $\beta$-methyladipic acid, decamethylene dicarboxylic acid, dodecamethylene dicarboxylic acid and pimelic acid.

Of these polymers (B), nylon-6 which is a homopolymer of $\epsilon$-caprolactam, and polyhexamethylene adipamide called nylon 66 are preferable because they are inexpensively available and because the resulting film can be biaxially oriented smoothly.

The mixture (C) is a mixture of the polymer (A) and the polymer (B). The mixture (C) may be a mixture of virgin polymers, or a mixture of scraps such as off-specification films or trims which are produced in the course of the production of a laminated film, or a mixture obtained by incorporating virgin polymers to the scraps. There is no particular limitation on the mixture ratio of these two types of polymers. It is, however, preferable that the weight ratio of the polymer (A) to the polymer (B) be in the range of 7:3 - 1:9.

The polymers (A) and (B) and the mixture (C) are all highly hygroscopic. When the starting materials are moistened, water vapor is generated and an oligomer is formed when they are thermally melted and extruded, and the formation of film is obstructed. It is therefore preferable to reduce, in advance, the water content of the starting material to 0.1% by weight or less by drying.

To the polymers (A) and (B) and the mixture (C), various additives such as a lubricant, an antistatic agent, an antioxidant, a blocking inhibitor, a stabilizer, a dye, a pigment and finely-divided particles of an inorganic material may be added in such an amount that they do not adversely affect the properties of the film obtained.

The polymer (P) is a mixture of a modified polyolefin (P1) and a polyolefin (P2), prepared by mixing 100 to 5% by weight of the modified polyolefin and O to 95% by weight of the polyolefin. When the amount of the modified polyolefin (P1) is less than 5% by weight, the dispersibility of the polymer (P) against the polyamide is poor, so that such an amount is not preferred.

The modified polyolefin (P1) is a polymer which is obtained by graft polymerizing an unsaturated carboxylic acid upon a polyolefin which is a base or trunk polymer. Specific examples of the polyolefin as a base polymer and those of the polyolefin (P2) include homopolymers and copolymers of olefins such as ethylene and propylene, and mixtures thereof. For example, a high-density polyethylene, a low-density polyethylene, a linear low-density polyethylene, an ethylene/vinylacetate copolymer, an ethylene/propylene copolymer, an ethylene/butene copolymer, polypropylene and the like can be mentioned. Specific examples of the unsaturated carboxylic acid include carboxylic acids such as acrylic acid, methacrylic acid, maleic acid, fumaric acid, itaconic acid and citraconic acid, acid anhydrides such as maleic anhydride, citraconic anhydride and itaconic anhydride, and metal salts such as potassium acrylate and potassium methacrylate. These unsaturated carboxylic acids may be used either singly or as a mixture of two or more types of the acids.

The modified polyolefin (P1) can be prepared by known production methods. For instance, it can be prepared by any one of the following methods: the method in which a polyolefin and an unsaturated carboxylic acid are reacted in the molten state (see, for example, Japanese Patent Publication No. 43-27421); the method in which these two compounds are reacted in solution (see, for example, Japanese Patent Publication No. 44-15422); the method in which the compounds are reacted in slurry (see, for example, Japanese Patent Publication No. 43-18144); and the method in which the compounds are reacted in a vapor phase (see, for example, Japanese Patent Kokai Publication No. 50-77493).

The unsaturated carboxylic acid content in the modified polyolefin (P1) is preferably in the range of 0.01 to 5% by weight, more preferably in the range of 0.1 to 3% by weight. When the unsaturated carboxylic acid content is less than 0.01% by weight, the polymer (P) cannot be uniformly mixed with the polyamide, and a hazy film is finally obtained. On the other hand, when the unsaturated carboxylic acid content exceeds 5% by weight, not only the production cost becomes high but also the resulting film cannot be improved in the flexing resistance any more. It is therefore useless to make the unsaturated carboxylic acid content of the modified polyolefin (P1) more than 5% by weight.

It is not necessary that the polyolefin as a base polymer of the modified polyolefin (P1) be the same as the polyolefin (P2). In order to uniformly disperse the polymer (P) into the polyamide, it is generally preferred that the modified polyolefin (P1) and the polyolefin (P2) be kneaded and pelletized in advance.

The biaxially-oriented laminated polyamide film according to the present invention comprises at least two types of layers selected from layer (a) comprising the polymer (A) in which the polymer (P) is incorporated, layer (b) comprising the polymer (B), and layer (c) comprising the mixture (C) in which the polymer (P) is incorporated. The number of the laminated layers is preferably from 3 to 5. Specific examples of the combination of the layers are as follows: (a)/(b)/(c), (b)/(a)/(c), (b)/(c)/(a), (c)/(a)/(c), (b)/(c)/-(a)/(b), (b)/(c)/(a)/(c)/(b), (b)/(a)/(c)/(a)/(b) and (c)/(b)/(a)/(b)/(c).

In order to improve the curling resistance of the biaxially-oriented laminated film (the term "curling" herein means such a phenomenon that a film cut into a predetermined size cannot hold its flatness when it is allowed to stand flat, and the edge or the center of the film lifts up), it is desirable to make the layer structure and thickness symmetric, such as the structure of (c)/(a)/(c) or (c)/(b)/(a)/(b)/(c).

In the biaxially-oriented laminated polyamide film, the polymer (P) content in the layer (a) is in the range of 0.3 to 5% by weight of the total weight of the polymers contained in the layer (a). When the polymer (P) content is less than 0.3% by weight, no substantial improvement in the flexing resistance can be made in the resulting film. On the other hand, when the polymer (P) content is more than 5% by weight, a hazy film is obtained. A particularly preferable range of the polymer (P) content in the layer (a) is from 0.5 to 4% by weight. In the case where trims or the like which are produced in the course of the production of a laminated film are used for preparing the layer (c), it is not always necessary to newly add the polymer (P) because the trims or the like contain the polymer (P). However, the polymer (P) may be newly added to control the polymer (P) content in the layer (c). The polymer (P) content in the layer (c) is 5% by weight or less of the total weight of the polymers contained in the layer (c). When the polymer (P) content exceeds 5% by weight, a hazy film is obtained. A particularly preferable range of the polymer (P) content in the layer (c) is from 0.1 to 3% by weight.

The two or more types of the polymers which are the components of the layer (a) or (c) can be admixed by any one of the following methods: the method in which pellets of each of the polymers are uniformly admixed by means of dry blending; the method in which dry-blended polymers are melted and pelletized through an extruder; and the like.

The biaxially-oriented laminated polyamide film according to the present invention can be prepared by a known method. At first, a non-oriented laminated film which is substantially amorphous and not oriented is prepared by using the starting materials, that is, the polymer (B), the polymer (A) containing the polymer (P), and the mixture (C) containing the polymer (P).

It is preferable to produce the non-oriented laminated film by a co-extrusion method which is advantageous in that it requires no adhesive agent to adhere single films to each other and that it can produce a laminated film having excellent properties. In the coextrusion method, the above starting materials are melted by using at least two extruders, extruded from a flat die or a circular die, and rapidly cooled to give a flat or cylindrical non-oriented laminated film.

Subsequently, the above-obtained non-oriented laminated film is subjected to biaxial orientation by drawing the film preferably 2.5 to 5 times both in the direction of flow of the film (longitudinal direction) and in the direction perpendicular to it (cross direction). When the drawing ratio is less than 2.5 times both in the longitudinal and cross directions, no appreciable orientation effects can be obtained, and the film cannot have a sufficiently high strength. On the other hand, when the drawing ratio is more than 5 times in both directions, the film is likely to be torn when it is drawn. Such drawing ratios are therefore not preferred. Any conventionally known drawing method such as of tenter-type sequential biaxial drawing, tenter-type simultaneous biaxial drawing or tubular-type simultaneous biaxial drawing may be employed.

For instance, in the case of tenter-type sequential biaxial drawing, the non-oriented laminated film is heated to a temperature of 50 to 110°C, and drawn 2.5 to 5 times in the longitudinal direction by means of a roller-type lengthwise-drawing machine. Subsequently, the resulting film is drawn 2.5 to 5 times in the cross direction at a temperature of 60 to 120°C by means of a tenter-type crosswise-drawing machine, whereby a desired oriented film is obtained. On the other hand, in the case of tenter-type simultaneous biaxial drawing or tubular-type simultaneous biaxial drawing, the non-oriented laminated film is drawn 2.5 to 5 times both in the longitudinal direction and in the cross direction at the same time at a temperature of, for instance, from 60 to 110°C to obtain a desired oriented film.

The oriented film thus obtained is then subjected to a heat treatment. By conducting the heat treatment, excellent dimensional stability can be imparted to the oriented film. Furthermore, by carrying out the heat treatment at a temperature selected from the range between 110°C as a lowest limit and a temperature 5°C lower than the melting point of the polymer (B) as an upper limit, an oriented film not only having excellent dimensional stability but also exhibiting a desired level of thermal shrinkage can be obtained.

The biaxially-oriented laminated film thoroughly fixed by the heat treatment is cooled in a conventional manner, and then rolled up.

The biaxially-oriented laminated polyamide film according to the present invention exhibits an oxygen permeability of 15 $cc/m^2 \cdot 24H \cdot atm$ or less at a temperature of 25°C and a relative humidity of 65%. With respect to the flexing resistance, the number of pinholes formed in the film is 15 holes/77 $inch^2$ or less, which is counted after subjecting the film to 3000-time flexing performed by a Gelbo flex tester at a temperature of 23°C and a relative humidity of 50%. Thus, the laminated film of the present invention is excellent in both the oxygen gas barrier properties and the flexing resistance.

It is preferable that the total thickness of the biaxially-oriented laminated polyamide film according to the present invention be 10 $\mu$m or more and 40 $\mu$m or less. When the total thickness of the laminated film is less than 10 $\mu$m, the oxygen gas barrier properties and the flexing resistance cannot be balanced well, and the abrasion resistance is poor. Such a film is therefore unsatisfactory as a packaging film. On the other hand, when the total thickness of the film is in excess of 40 $\mu$m, the film is hard. In addition, in the case where a sealant layer is adhered to the film, the resulting film becomes extremely thick, so that it cannot be suitably used as a flexible packaging film.

The present invention will now be explained in more detail with reference to the following examples, which are given only for illustrating the invention and not to be limiting thereof.

In the following examples, the properties of the films obtained were determined in accordance with the following methods. The layer structures of the films and the properties determined are shown in Table 1.

⟨Oxygen Permeability (cc/m$^2$•24H•atm)⟩

The oxygen permeability of the film was measured using an oxygen permeability measuring apparatus, OXYTRAN 100 manufactured by Modern Control Corporation, at a temperature of 25°C and a relative humidity of 65%. ⟨Flexing Resistance (number of pinholes/77 inch$^2$)⟩

The film was conditioned by allowing it to stand at a temperature of 23°C and a relative humidity of 50% for 24 hours or more, and then cut into a rectangular specimen with a size of 8 inch x 11 inch. The rectangular specimen was subjected to a test in which flexing operation was repeated 3000 cycles by using a Gelbo flex tester (No. 901) manufactured by Rigaku Kogyo K.K.: one cycle of the flexing operation includes 3.5-inch move of a movable head with 440° rotation and a further 2.5-inch move of the head without rotation, and then the entirely reverse movement. After the test was completed, the number of pinholes formed in the film was counted.

Example 1

100 parts by weight of an ethylene-propylene copolymer containing 83 mol% of ethylene, having a melt flow index of 1.0 g/10 min, 0.025 parts by weight of $\alpha,\alpha'$-bis-t-butylperoxy-p-diisopropylbenzene dissolved in a small amount of acetone, and 0.8 parts by weight of maleic anhydride were mixed in a Henschel mixer. The granular mixture thus obtained was extruded and pelletized at a temperature of 230°C through an extruder with an inner diameter of 40 mm∅ and an L/D ratio of 28, thereby obtaining pellets of a modified ethylene-propylene copolymer (modified polyolefin (P1)). 20% by weight of the pellets and 80% by weight of an ethylene-vinyl acetate copolymer (polyolefin (P2)) containing 8% by weight of vinyl acetate, having a melt flow index of 1.5 g/10 min were mixed, and extruded and pelletized at a temperature of 200°C through an extruder with an inner diameter of 40 mm∅ and an L/D ratio of 28 to obtain pellets of a polymer (polymer (P)).

Subsequently, a polymer which was a 97:3 mixture of polymethaxylylene adipamide (MX-Nylon 6007 manufactured by Mitsubishi Gas Chemical Company Inc.) (polymer (A)) and the above-obtained polymer (P), poly-$\epsilon$-caproamide (Novamid 1022 manufactured by Mitsubishi Kasei Corporation) (polymer (B)), and pulverized trims (a mixture ratio of polymer (A) and polymer (B) was 40:60, the polymer (P)content in the entire polymer was 1.2 % by weight) were separately melted at a temperature of 230°C by using three extruders each having an inner diameter of 65 mm∅. The polymers thus melted were placed one on another in a co-extrusion T-die, and extruded to produce a laminated film having three layers. The laminated film was then rapidly cooled by bringing it into close contact with a cast roller at a temperature of 30°C. Thus, a non-oriented laminated film composed of an outer layer made of the polymer (B), having a thickness of approximately 54 $\mu$m, an intermediate layer made of the polymer (A) containing the polymer (P), having a thickness of approximately 36 $\mu$m, and an inner layer made of the mixture (C) (a mixture of the polymer (A) and the polymer (B)) containing the polymer (P), having a thickness of approximately 45 $\mu$m was obtained.

The above-obtained non-oriented laminated film was drawn three times in the longitudinal direction using a roller-type drawing machine at a temperature of 60°C. Subsequently, the edges of the film were held by tenter clips, and then the film was drawn three times in the cross direction in a tenter oven at a temperature of 90°C. Thereafter, the film was subjected to heat treatment at a temperature of 205°C for 6 seconds.

After the heat treatment, both of the edges of the film at which the film was held by the clips were trimmed off as scraps. The product film was wound around a winder, whereby a biaxially-oriented laminated polyamide film composed of a layer (layer (b)) of the polymer (B), having a thickness of approximately 6

6

μm, a layer (layer (a)) of the polymer (A) containing the polymer (P), having a thickness of approximately 4 μm, and a layer (layer (c)) of the mixture (C) containing the polymer (P), having a thickness of approximately 5 μm, laminated in this order was obtained. The total thickness of the laminated film was approximately 15 μm.

The structure of the laminated film thus obtained, and the oxygen permeability and the flexing resistance of the film respectively measured in accordance with the above mentioned methods are shown in Table 1.

Example 2

The procedure of Example 1 was repeated except that the ethylene-propylene copolymer was replaced by an ethylene butene copolymer (ethylene content: 80 mol%, melt flow index: 2.0 g/10 min), whereby a biaxially-oriented laminated polyamide film was obtained.

The structure of the laminated film thus obtained, and the oxygen permeability and the flexing resistance of the film respectively measured in accordance with the above mentioned methods are shown in Table 1.

Examples 3 to 10

Biaxially-oriented laminated polyamide films were prepared in the same manner as in Example 1 with the type of the polymer (P), the polymer (P) content, the layer structure, the thickness of the film and the compositional ratio of the starting materials changed as shown in Table 1.

The structures of the laminated films thus obtained, and the oxygen permeabilities and the flexing resistances respectively measured in accordance with the above mentioned methods are shown in Table 1.

Comparative Example 1

The procedure of Example 1 was repeated except that the polymer (P) was not used, whereby a biaxially-oriented laminated polyamide film was obtained.

The structure of the laminated film thus obtained, and the oxygen permeability and the flexing resistance of the film respectively measured in accordance with the above mentioned methods are shown in Table 1.

Comparative Example 2

The procedure of Example 1 was repeated except that the polymer (P) was replaced by a high-density polyethylene (Mitsubishi ES300 manufactured by Mitsubishi Kasei Corporation). However, a biaxially-oriented laminated polyamide film acceptable as a good product was not obtained.

Comparative Example 3

The oxygen gas barrier property and the flexing resistance of a commercially available biaxially-oriented nylon film coated with vinylidene chloride (Santonyl SG manufactured by Mitsubishi Kasei Polytec Company, thickness: 17 μm) were respectively measured in accordance with the above mentioned methods. The results are shown in Table 1.

Example 11

A polymer which was a 97:3 mixture of polymethaxylylene adipamide (MX-Nylon 6007 manufactured by Mitsubishi Gas Chemical Company Inc.) (polymer (A)) and the polymer (P) prepared in Example 1, and a 1:1 mixture of poly-ε-caproamide (Novamid 1022 manufactured by Mitsubishi Kasei Corporation) (polymer (B)) and pulverized trims (mixture ratio of the polymer (A) and the polymer (B): 40:60, the polymer (P) content in the entire polymer: 1.2% by weight) were separately melted by using two extruders each having an inner diameter of 65 mmⵁ. The polymers thus melted were placed, with the latter one divided into two, in a co-extrusion T-die, and extruded to produce a laminated film comprising three layers of the two types of polymers. The laminated film was then cooled rapidly by bringing it into close contact with a cast roller at a temperature of 30°C. Thus, a non-oriented laminated film composed of outer layers made of the mixture (C) containing the polymer (P), each having a thickness of approximately 54 μm, and an intermediate layer made of the polymer (A) containing the polymer (P), having a thickness of approximately 36 μm was obtained.

The above-obtained non-oriented laminated film was drawn three times in the longitudinal direction using a roller-type drawing machine at a temperature of 60°C. Subsequently, the edges of the film were held by tenter clips, and then the film was drawn three times in the cross direction in a tenter oven at a temperature of 90°C. Thereafter, the film was subjected to heat treatment at a temperature of 205°C for 6 seconds.

After the heat treatment, the edges of the film at which the film was held by the clips were trimmed off as scrap. The product film was wound around a winder, whereby a biaxially-oriented laminated polyamide film composed of outer layers (layers (c)) of the mixture (C) containing the polymer (P), each having a thickness of approximately 6 μm, and an intermediate layer (layer (a)) of the polymer (A) containing the polymer (P), having a thickness of approximately 4 μm was obtained. The total thickness of the laminated film was approximately 16 μm. The structure of the laminated film thus obtained, and the oxygen permeability and the flexing resistance of the film respectively measured in accordance with the above mentioned methods are shown in Table 1.

Examples 12 to 17

Biaxially-oriented laminated polyamide films were obtained in the same manner as in Example 11 except that the type of the polymer (P) and the polymer (P) content were changed as shown in Table 1.

The structures of the laminated films thus obtained, and the oxygen permeabilities and the flexing resistances of the films respectively measured in accordance with the above mentioned methods are shown in Table 1.

Examples 18 and 19

Biaxially-oriented laminated polyamide films were obtained in the same manner as in Example 11 except that the polymer (P) content, the layer structure, the thickness of the film and the compositional ratio of the starting materials were respectively changed as shown in Table 1.

The structures of the laminated films thus obtained, and the oxygen permeabilities and the flexing resistances of the films respectively measured in accordance with the above mentioned methods are shown in Table 1.

Table 1

| Item / Example No. | Layer Structure Thickness of Layer ($\mu$m) | Mixture Ratio A:B in Layer C | Polymer (P) | | | P Content (wt%) | | Oxygen Permeability | Number of Pinholes |
|---|---|---|---|---|---|---|---|---|---|
| | | | P2 | P1 | P1 Content in P (wt%) | Layer a | Layer c | | |
| Ex. 1 | b/a/c 6/4/5 | 40:60 | EVA | Et-Pr | 20 | 3 | 1.2 | 8 | 6 |
| Ex. 2 | b/a/c 6/4/5 | 40:60 | EVA | Et-Bt | 20 | 3 | 1.2 | 8 | 6 |
| Ex. 3 | b/a/c 6/4/5 | 40:60 | EVA | Et-Pr | 50 | 3 | 1.2 | 8 | 7 |
| Ex. 4 | b/a/c 6/4/5 | 40:60 | – | Et-Pr | 100 | 3 | 1.2 | 8 | 7 |
| Ex. 5 | b/a/c 6/4/5 | 60:40 | LD | Et-Pr | 20 | 3 | 1.8 | 8 | 7 |
| Ex. 6 | b/a/c 6/4/5 | 40:60 | PP | Et-Pr, PP | 30 | 3 | 1.2 | 8 | 7 |
| Ex. 7 | b/a/c 6/4/5 | 40:60 | EVA | Et-Pr | 20 | 5 | 2.0 | 8 | 4 |
| Ex. 8 | b/a/c 6/4/5 | 40:60 | EVA | Et-Pr | 20 | 1 | 0.4 | 8 | 10 |

9

Table 1 - continued

| Item / Example No. | Layer Structure / Thickness of Layer (μm) | Mixture Ratio A:B in Layer C | Polymer (P) | | | P Content (wt%) | | Oxygen Permeability | Number of Pinholes |
|---|---|---|---|---|---|---|---|---|---|
| | | | P2 | P1 | P1 Content in P (wt%) | Layer a | Layer c | | |
| Ex. 9 | a/c/b 4/6/5 | 40:60 | EVA | Et-Pr | 20 | 3 | 1.2 | 8 | 8 |
| Ex. 10 | b/c/a/c/b 3/3/4/3/3 | 40:60 | EVA | Et-Pr | 20 | 1.5 | 0.6 | 8 | 7 |
| Comp. Ex. 1 | b/a/c 6/4/5 | 40:60 | - | - | - | - | - | 8 | 18 |
| Comp. Ex. 2 | b/a/c 6/4/5 | 40:60 | HD | - | - | 3 | 1.2 | (poor dispersion, occurrence of gel) unstable in drawing | |
| Comp. Ex. 3 | K-ONY | - | - | - | - | - | - | 11 | 20 |
| Ex. 11 | c/a/c 6/4/6 | 20:80 | EVA | Et-Pr | 20 | 3 | 0.6 | 8 | 5 |
| Ex. 12 | c/a/c 6/4/6 | 20:80 | EVA | Et-Bt | 20 | 3 | 0.6 | 8 | 5 |

Table 1 - continued

| Item / Example No. | Layer Structure Thickness of Layer (μm) | Mixture Ratio A:B in Layer C | Polymer (P) | | | P Content (wt%) | | Oxygen Permeability | Number of Pinholes |
|---|---|---|---|---|---|---|---|---|---|
| | | | P2 | P1 | P1 Content in P (wt%) | Layer a | Layer c | | |
| Ex. 13 | c/a/c 6/4/6 | 20:80 | – | Et-Pr | 100 | 3 | 0.6 | 8 | 5 |
| Ex. 14 | b/a/c 6/4/6 | 20:80 | LD | Et-Pr | 20 | 3 | 0.6 | 8 | 6 |
| Ex. 15 | c/a/c 6/4/6 | 20:80 | PP | Et-Pr, PP | 30 | 3 | 1.0 | 8 | 6 |
| Ex. 16 | c/a/c 6/4/6 | 20:80 | EVA | Et-Pr | 20 | 5 | 2.0 | 8 | 4 |
| Ex. 17 | c/a/c 6/4/6 | 20:80 | EVA | Et-Pr | 20 | 1 | 0.4 | 8 | 8 |
| Ex. 18 | c/a/c 7/4/6 | 30:70 | EVA | Et-Pr | 20 | 3 | 1.0 | 8 | 5 |
| Ex. 19 | c/b/a/b/c 3/3/4/3/3 | 40:60 | EVA | Et-Pr | 20 | 3 | 1.2 | 8 | 4 |

Abbreviations in Table 1 have the following meanings:

A: Polymer (A)
B: Polymer (B)
P1: Modified polyolefin
P2: Polyolefin

11

EP 0 527 237 A1

| P: | Polymer (P) |
| EVA: | Ethylene-vinyl acetate copolymer (vinyl acetate content: 8% by weight, melt flow index: 1.5 g/10 min) |
| LD: | Low-density polyethylene (Mitsubishi F251 manufactured by Mitsubishi Kasei Corporation) |
| PP: | Polypropylene (Mitsubishi 6100E manufactured by Mitsubishi Kasei Corporation) |
| HD: | High-density polyethylene (Mitsubishi ES300) |
| Et-Pr: | Ethylene-propylene copolymer modified with maleic anhydride |
| Et-Bt: | Ethylene-butene copolymer modified with maleic anhydride |
| Et-Pr, PP: | Mixture of the ethylene-propylene copolymer used in Example 1 and polypropylene (Mitsubishi 6100E) (mixture ratio: 20:80), modified with maleic anhydride in the same manner as in Example 1 |

It can be seen from Table 1 that the biaxially-oriented laminated polyamide films according to the present invention are excellent in both oxygen gas barrier properties and flexing resistance, in particular, in flexing resistance. The data for Examples shows that both the oxygen permeabilities of the laminated films and the number of pinholes produced in the films by the flexing tests fall within the aforementioned ranges. In contrast, although the films obtained in Comparative Examples have the oxygen gas barrier properties equal to those of the films obtained in Examples, they are remarkably inferior in the flexing resistances.

INDUSTRIAL APPLICABILITY

The present invention have the following advantages, so that the industrial value thereof is considered to be very high.

1. The biaxially-oriented laminated polyamide film according to the present invention has excellent oxygen gas barrier properties as well as excellent flexing resistance, toughness and the like. Accordingly, it can be suitably used as a packaging film for foods, medical supplies, medicines and the like for which denaturation by oxidation must be avoided.

2. Further, the biaxially-oriented laminated polyamide film according to the present invention can be produced with the reuse of scraps such as trims. Scraps can thus be industrially utilized effectively.

**Claims**

1. A biaxially-oriented laminated polyamide film characterized in that it is produced by using the following polymer (A), polymer (B), mixture (C) and polymer (P) as starting materials, and that it comprises three or more layers of at least two types of layers selected from layer (a) comprising the polymer (A) containing 0.3 to 5% by weight of the polymer (P), layer (b) comprising the polymer (B) and layer (c) comprising the mixture (C) containing 5% by weight or less of the polymer (P):

   polymer (A): an aromatic polyamide containing in its molecular chain 70 mol% or more of polyamide-constituting units consisting of m- and/or p-xylylenediamine and an $\alpha,\omega$ aliphatic dicarboxylic acid having 6 to 12 carbon atoms;

   polymer (B): an aliphatic polyamide;

   mixture (C): a mixture of the polymer (A) and the polymer (B); and

   polymer (P): a mixture of 100 to 5% by weight of a polyolefin grafted with an unsaturated carboxylic acid and O to 95% by weight of a polyolefin.

2. The film according to claim 1, wherein the polymer (A) is selected from the group consisting of polymethaxylylene adipamide, polymethaxylylene pimelamide, polymethaxylylene azelamide, polyparaxylylene azelamide, polyparaxylylene decanamide, a methaxylylene/paraxylylene adipamide copolymer, a methaxylylene/paraxylylene pimelamide copolymer, a methaxylylene/paraxylylene azelamide copolymer and a methaxylylene/paraxylylene sebacamide copolymer.

3. The film according to claim 1, wherein the polymer (B) is selected from the group consisting of a homopolymer of $\epsilon$-caprolactam, polyhexamethylene adipamide, and a copolymer comprising $\epsilon$-caprolactam or hexamethylene adipamide as a main component and 2 to 10 mol% of a compound copolymerizable with the main component.

4. The film according to claim 1, wherein the weight ratio of the polymer (A) to the polymer (B) in the mixture (C) is from 7:3 to 1:9.

12

5. The film according to claim 1, wherein the unsaturated carboxylic acid content in the polyolefin grafted with the unsaturated carboxylic acid is from 0.01 to 5% by weight.

6. The film according to claim 1, wherein the polymer (P) content in the layer (a) is from 0.5 to 4% by weight, and the polymer (P) content in the layer (c) is from 0.1 to 3% by weight.

7. The film according to claim 1 comprising 3 to 5 layers.

8. The film according to claim 7 having the layer structure of (c)/(a)/(c) or (c)/(b)/(a)/(b)/(c).

9. The film according to claim 1, which has been drawn 2.5 to 5 times both in the flow and width directions.

10. The film according to claim 1 having a total thickness of 10 to 40 $\mu$m.

# INTERNATIONAL SEARCH REPORT

International Application No  PCT/JP92/00211

## I. CLASSIFICATION OF SUBJECT MATTER (if several classification symbols apply, indicate all) 6

According to International Patent Classification (IPC) or to both National Classification and IPC

Int. Cl$^5$  B32B27/34, B29C55/12//B29K77:00,
            B29L7:00, B29L9:00

## II. FIELDS SEARCHED

### Minimum Documentation Searched 7

| Classification System | Classification Symbols |
|---|---|
| IPC | B32B27/34, B29C55/12//B29K77:00, B29L7:00, B29L9:00 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 57-51427 (Toyobo Co., Ltd.), March 26, 1982 (26. 03. 82), Claim (Family: none) | 1-10 |
| A | JP, A, 56-155762 (Nippon Stilen Paper K.K.), December 2, 1981 (02. 12. 81), Claim (Family: none) | 1-10 |
| A | JP, A, 1-238933 (Tosoh Corp.), September 25, 1989 (25. 09. 89), Claim (Family: none) | 1-10 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| May 7, 1992 (07. 05. 92) | May 26, 1992 (26. 05. 92) |

| International Searching Authority | Signature of Authorized Officer |
|---|---|
| Japanese Patent Office | |